# EUROPÄISCHE PATENTSCHRIFT

(11) **EP 2 199 345 B1**
(45) Veröffentlichungstag und Bekanntmachung des Hinweises auf die Patenterteilung: **02.11.2011**
(21) Anmeldenummer: 09178968.5
(22) Anmeldetag: 11.12.2009
(51) Int. Cl.: C08L 83/04, C08K 9/04

(54) **Kontinuierliches Verfahren zur Herstellung von Organopolysiloxanzusammensetzungen**
Continuous process for the production of organopolysiloxane compositions
Dispositif à faisceaux de particules chargées et son procédé de préparation

(30) Priorität: 19.12.2008 DE 102008055041
(43) Veröffentlichungstag der Anmeldung: 23.06.2010
(73) Patentinhaber: Wacker Chemie AG, 81737 München (DE)
(72) Erfinder: Hierstetter, Thomas, 84489, Burghausen (DE); Schuster, Johann, 84547, Emmerting (DE); Birneder, Richard, 84359, Simbach (DE)
(74) Vertreter: Mieskes, Klaus Theoderich

(56) Entgegenhaltungen:
- DE-A1- 19 617 606

## Beschreibung

Die vorliegende Erfindung betrifft ein kontinuierliches Verfahren zur Herstellung von Grundmassen für additionsvernetzende oder kondensationsvernetzende Siliconzusammensetzungen, die eine verbesserte Stabilität gegenüber Viskositätsanstieg, SiH-Abbau, Änderung der Reaktivität sowie Additivabbau nach Lagerung aufweisen.

Dem Fachmann auf dem Gebiet der Siliconelastomere ist bekannt, dass Füllstoff-haltige Siliconzusammensetzungen wie beispielsweise RTV-2 (=raumtemperaturhärtende 2 Komponenten) Siliconkautschuke zu einem überwiegenden Anteil aus Grundmassen aufgebaut sind. Für die Herstellung von RTV-2-Siliconkautschuken werden Grundmassen mit einem Vulkanisationsagens sowie mit weiteren typischen Bestandteilen von additionsvernetzenden oder kondensationsvernetzenden Siliconzusammensetzungen homogen miteinander vermischt, die zur Einstellung bestimmter Endeigenschaften der nach der Vulkanisation erhaltenen Siliconelastomere dienen.

In Anlehnung an den Stand der Technik werden zur Herstellung von Grundmassen entweder vorhydrophobierte Füllstoffe eingesetzt, die zusammen mit entsprechenden Organopolysiloxanen homogen miteinander vermischt und geknetet werden. Ein anderer Weg zur Herstellung von Grundmassen besteht in der Verwendung von hydrophilen Füllstoffen, die während des sog. Compoundiervorgangs unter Verwendung von geeigneten Behandlungsmitteln in-situ hydrophobiert werden. In beiden Fällen kann der Einarbeitungsvorgang über ein kontinuierliches oder diskontinuierliches Herstellverfahren erfolgen. Die diskontinuierlichen Batch-Verfahren, hier insbesondere der in-situ-prozess, zeichnen sich durch eine ungünstige Raumzeitausbeute, einen hohen Energieverbrauch und der Notwendigkeit des Einsatzes von Schutzgas aufgrund der Gefahr der Bildung explosiver Gemische aus und sind zudem sehr kapital- und arbeitsintensiv. In diskontinuierlichen Knetern können Siliconzusammensetzungen aus Grundmassen, bestehend aus Organopolysiloxanen und vorhydrophobierten oxidischen verstärkenden Füllstoffen, mit hoher Lagerstabilität hergestellt werden, wobei sich die auf Basis dieser Grundmassen hergestellten Siliconelastomere durch ein sehr ausgewogenes mechanisches Eigenschaftsprofil auszeichnen.

Im Stand der Technik sind zahlreiche Technologien bekannt, um Siliconzusammensetzungen über kontinuierliche Verfahrensschritte herzustellen. Die kontinuierlichen Verfahrensschritte können sich dabei sowohl auf die kontinuierliche Herstellung von Grundmassen als auch auf die kontinuierliche Herstellung von fertigen Siliconzusammensetzungen beziehen, wobei Letztere in den meisten Fällen aus einer oder wenigstens zwei Komponenten bestehen.

Siliconzusammensetzungen, die aus kontinuierlich hergestellten Grundmassen aufgebaut sind und bei denen vorhydrophobierte Füllstoffe eingesetzt werden, weisen in der Regel eine verminderte Stabilität im Vergleich zu Siliconzusammensetzungen auf, die diskontinuierlich hergestellte Grundmassen enthalten.

Die angesprochene verminderte Stabilität der gemäß dem Stand der Technik aus kontinuierlich hergestellten Grundmassen hergestellten Siliconzusammensetzungen kann sich beispielsweise in Form eines Anstiegs der Viskosität der Siliconzusammensetzungen nach Lagerung manifestieren, wobei dies insbesondere bei erhöhten Temperaturen auftritt, wie beispielsweise beim Transport der Siliconzusammensetzungen.

Aufgrund einer vergleichsweise geringen Verweilzeit der Organopolysiloxane und des Füllstoffs bei kontinuierlichen Verfahren zur Herstellung von Grundmassen kann dies auch zu einer unzureichenden Desaktivierung der Füllstoffoberfläche führen, woraus sich die Möglichkeit von unerwünschten Reaktionen in der fertigen Siliconzusammensetzung ergeben kann. Des Weiteren kann eine nicht ausreichend desaktivierte Füllstoffoberfläche bei selbsthaftenden Siliconzusammensetzungen zu unerwünschten Reaktionen reaktiver Gruppen an der Füllstoffoberfläche mit Additiven wie z. B. Haftvermittlern führen, was zwangsläufig zu einer Verschlechterung der Haftungseigenschaften führt.

EP 0 807 509 A1 offenbart die kontinuierliche Herstellung von lagerstabilen additionsvernetzenden Flüssigsiliconkautschuken unter Verwendung einer speziellen Knetmaschinenkaskade. Dabei erfolgt die Entgasung der mittels der Knetmaschine hergestellten Grundmassen über einen einfachen Entgasungsbehälter. Die aus diesen Grundmassen hergestellten Siliconzusammensetzungen zeichnen sich bereits durch eine gute Stabilität hinsichtlich Viskositätsanstieg bei Lagerung aus. Ein wesentlicher Nachteil dieses Verfahrens ist jedoch, dass sich nur lagerstabile Grundmassen kontinuierlich herstellen lassen, die in einem Viskositätsbereich von mehr als 500.000 mPa*s liegen. Organopolysiloxanmassen mit einer Viskosität unter 500.000 mPa*s sind nach einem solchen Verfahren nicht stabil herstellbar. Ein weiterer Nachteil des in EP 0 807 509 A1 beschriebenen Verfahren ist, dass mit diesem kontinuierlichen Verfahren Volumenströme von maximal 300 kg/h realisiert werden können. Bei höheren Durchsätzen kann bereits eine deutliche Verschlechterung der Stabilität der Grundmassen beobachtet werden.

Der vorliegenden Erfindung liegt daher die Aufgabe zugrunde, den Stand der Technik zu verbessern und ein kontinuierliches Verfahren zur Herstellung einer aus vorhydrophobiertem oxidischen verstärkenden Füllstoff und Organopolysiloxanen bestehenden Grundmasse mit Viskositäten unter 500.000 mPa*s bereitzustellen.

Die so hergestellten Organosiliconzusammensetzungen sollen zudem den folgenden Anforderungen gerecht werden:
- hohe Stabilität gegenüber Viskositätsanstieg bei Lagerung, insbesondere bei erhöhten Temperaturen,
- hohe Stabilität gegenüber Reaktivitätsverlust, d. h. möglichst keine oder nur eine geringe Änderung der Vernetzungscharakteristik bei Lagerung,
- hohe Stabilität gegenüber unerwünschten Reaktionen mit Additiven, wie beispielsweise Haftvermittlern oder Stabilisatoren,
- leichte Entformbarkeit aus insbesondere metallischen Vulkanisationsformen unmittelbar nach der Vulkanisation,
- hohes Niveau der Gebrauchseigenschaften wie mechanisches Eigenschaftsprofil wie insbesondere Weiterreißwiderstand, Reißfestigkeit, und Reißdehung und Transparenz.

Gegenstand der Erfindung ist daher ein Verfahren zur Herstellung von Grundmassen mit einer Viskosität von < 500.000 mPa*s, gemessen bei 25°C und einer Scherrate von 1 s⁻¹, bei dem
mindestens ein Organopolysiloxan (A) ausgewählt aus der Gruppe enthaltend pro Molekül im Durchschnitt mindestens 1,5 Reste mit aliphatisch ungesättigten Kohlenstoff-Kohlenstoff-Mehrfachbindungen oder Hydroxylgruppen oder Wasserstoffatome oder Kombinationen daraus
mit
mindestens einem vorhydrophobierten oder in situ hydrophobierten, oxidischen, verstärkenden Füllstoff (B),
in einer ersten Verfahrensstufe in einer Knetkaskade (1) mit wenigstens zwei in Reihe nebeneinander angeordneten Knetkammern (2), die jeweils zwei achsparallele, gleich- oder gegensinnig angetriebene Knetwerkzeuge (3) enthalten und die durch quer zu den Achsen (4) der Knetwerkzeuge (3) passierbare Öffnungen (5) miteinander verbunden sind, wobei mindestens die erste Knetkammer eine Beschickungsöffnung (6) und die letzte Knetkammer eine Austragsöffnung (7) aufweisen, homogen miteinander vermischt und geknetet werden,
und die so erhaltene Masse,
in einer zweiten nachgeschalteten Verfahrensstufe einer Nachbehandlung in einer Rührvorrichtung (8) unterworfen wird,
die über eine Beschickungsöffnung (9) verfügt, über welche die über die erste Verfahrensstufe hergestellte Masse mit einem definierten Volumenstrom X der Rührvorrichtung (8) zugeführt, unter fortwährender Erneuerung der Oberfläche (14) unter Einsatz von rotierenden Misch- (10) oder Dispergierzeugen (19) oder Abstreifern (20) oder deren Kombination mit Scherkraft beaufschlagt und entgast, und über eine Austragsöffnung (11) mit dem Volumenstrom Y aus der zweiten Verfahrensstufe ausgeschleust wird.

In einer bevorzugten Ausführungsform weisen die erfindungsgemäß hergestellten Grundmassen eine Viskosität von < 400.000 mPa*s, besonders bevorzugt von < 300.000 mPa* gemesen bei 25°C und einer Scherrate von 1 s⁻¹ auf.

In einer bevorzugten Ausführungsform entspricht (A) linearen oder verzweigten Organopolysiloxane aus Einheiten der allgemeinen Formel (I)

R¹ₐR²_{b}SiO_{(4-a-b)/2} (I)

wobei
R¹ einwertige, gegebenenfalls mit Halogenatomen substituierte C₁- bis C₁₀-Kohlenwasserstoffreste, die frei sind von aliphatischen Kohlenstoff-Kohlenstoff-Mehrfachbindungen,
R² Wasserstoffatome, Hydroxylgruppen oder einwertige Kohlenwasserstoffreste mit aliphatischer Kohlenstoff-Kohlenstoff-Mehrfachbindung mit 2 bis 8 Kohlenstoffatomen je Rest,
a die Werte 0, 1, 2 oder 3 und
b die Werte 0, 1 oder 2
bedeuten.

Die Organopolysiloxane (A) besitzen vorzugsweise eine durchschnittliche Viskosität von mindestens 10, insbesondere mindestens 100 mPas, und vorzugsweise höchstens 10⁶, insbesondere höchstens 10⁵ mPas bei 25°C.

Beispiele für unsubstituierte Kohlenwasserstoffreste R¹ sind der Methyl-, Ethyl-, n- Propyl-, iso-Propyl-, n-Butyl-, isoButyl-, tert.-Butyl-, n- Pentyl-, iso-Pentyl-, neo-Pentyl-, tert.-Pentylrest; Hexylreste, wie der n-Hexyl- und Cyclohexylrest; Heptylreste, wie der n-Heptylrest; Octylreste, wie der n- Octylrest und iso-Octylreste, wie der 2,2,4-Trimethylpentylrest; Nonylreste, wie der n-Nonylrest; Decylreste, wie der n-Decylrest; Cycloalkylreste, wie ,der Cyclohexylrest; Beispiele für mit Halogenatomen substituierte Kohlenwasserstoffreste R1 sind der 3,3,3- Trifluor-n-propylrest, der 2,2,2,2',2',2'- Hexafluorisopropylrest, der Heptafluorisopropylrest, der 3- Chlor-n-propylrest, der 2-Ethylbromidrest und der 3-Propylbromidrest. Vorzugsweise bedeutet R¹ C₁- bis C₆-Kohlenwasserstoffreste, insbesondere Methyl- Ethyl- und Phenylreste.

Beispiele für einwertige Kohlenwasserstoffreste R² mit aliphatischer Kohlenstoff-Kohlenstoff-Mehrfachbindung mit 2 bis 8 Kohlenstoffatomen je Rest R² sind Alkenylreste, wie der Vinyl-, 5-Hexenyl-, 1-Propenyl-, Allyl-, 1-Butenyl- und 1-Pentenylrest; und Alkinylreste, wie der Ethinyl-, Propargyl- und 1-Propinylrest.

Vorzugsweise weisen die organopolysiloxane (A) mindestens 90, insbesondere mindestens 95 Mol-% Einheiten der allgemeinen Formel (I) auf, in denen die Summe a+b = 2 beträgt. Vorzugsweise weisen die Organopolysiloxane (A) mindestens 60, insbesondere mindestens 80, speziell mindestens 95 Mol-% Einheiten der allgemeinen Formel (I) auf, in denen b den Wert 0 hat.

Das Organopolysiloxan (A) der allgemeinen Formel (I) kann ein Organopolysiloxan mit einer monomodalen oder multimodalen Molekulargewichtsverteilung sein, oder Mischungen aus verschiedenen Organopolysiloxanen mit monomodaler oder multimodaler Molekulargewichtsverteilung.

Das Organopolysiloxan (A) der allgemeinen Formel (I) weist vorzugsweise 1 bis 15, besonders bevorzugt 1 bis 10, insbesondere 1 bis 4 Reste R² auf.

Beispiele für das Organopolysiloxan (A) der allgemeinen Formel (I) sind lineare, verzweigte und cyclische Organopolysiloxane, wobei diese aus Einheiten der Formeln (CH₃)₃SiO_{1/2}, (H₂C=CH)(CH₃)₂SiO_{1/2}, (CH₃)₂SiO_{2/2}, (H₂C=CH)(CH₃)SiO_{2/2}, (H)(CH₃)₂SiO_{1/2}, (H)(CH₃)SiO_{2/2}, (H0)(CH₃)₂SiO_{1/2}, (H0)(CH₃)SiO_{2/2} oder aus deren Mischungen bestehen.

Bevorzugte Ausführungsformen der Organopolysiloxane (A) mit aliphatischen Kohlenstoff-Kohlenstoff- Mehrfachbindungen sind: Copolymere enthaltend (H₂C=CH)(CH₃)SiO_{2/2}- und (CH₃)₂SiO_{2/2}-Einheiten, aufweisend (CH₃)₃SiO_{1/2}-Endgruppen, Copolymere enthaltend (CH₃)₂SiO_{2/2}-Einheiten, aufweisend (H₂C=CH)(CH₃) ₂SiO_{1/2}-Endgruppen, Copolymere enthaltend (H₂C=CH)(CH₃)SiO_{2/2}- und (CH₃)₂SiO_{2/2}-Einheiten, aufweisend (H₂C=CH)(CH₃₎₂SiO_{1/2}-Endgruppen, Copolymere enthaltend (CH₃)₂SiO_{2/2}-Einheiten, aufweisend (CH₃)₃SiO_{1/2}-Endgruppen, Copolymere enthaltend (Ph)₂SiO_{2/2}- und (H₂C=CH)(CH₃) SiO_{2/2}-Einheiten, aufweisend (CH₃)₃SiO_{1/2}-Endgruppen, Copolymere enthaltend (Ph)₂SiO_{2/2}-, (CH₃)₂SiO_{2/2}- und (H₂C=CH)(CH₃)SiO_{2/2}-Einheiten, aufweisend (CH₃)₃SiO_{1/2}-Endgruppen, Copolymere enthaltend (Ph)₂SiO_{2/2}- und (H₂C=CH)(CH₃)SiO_{2/2}-Einheiten, aufweisend (H₂C=CH)(CH₃)₂SiO_{1/2}-Endgruppen, Copolymere enthaltend (Ph)₂SiO_{2/2}-, (CH₃)₂SiO_{2/2}- und (H₂C=CH)(CH₃)SiO_{2/2}-Einheiten, aufweisend (H₂C=CH)(CH₃)SiO_{1/2}-Endgruppen,

Copolymere enthaltend (Ph)(CH₃)SiO_{2/2}-, (CH₃)₂SiO_{2/2}- und (H₂C=CH)(CH₃)Si_{2/2}-Einheiten aufweisend (CH₃)₃SiO_{1/2}-Endgruppen, Copolymere enthaltend (Ph)(CH₃)SiO_{2/2}-, (CH₃)₂SiO_{2/2}- und (H₂C=CH)(CH₃)Si_{2/2}-Einheiten aufweisend (H₂C=CH)(CH₃)₂SiO_{1/2}-Endgruppen, Copolymere enthaltend (Ph)(CH₃)SiO_{2/2}- und (H₂C=CH)(CH₃)Si_{2/2}-Einheiten aufweisend (CH₃)₃SiO_{1/2}-Endgruppei-i,

Besonders bevorzugte Ausführungsformen der Organopolysiloxane (A) mit aliphatischen Kohlenstoff-Kohlenstoff-Mehrfachbindungen sind
Copolymere enthaltend (H₂C=CH)(CH₃)SiO_{2/2}- und (CH₃)₂SiO_{2/2}-Einheiten, aufweisend (CH₃)₃SiO_{1/2}-Endgruppen,
Copolymere enthaltend (CH₃)₂SiO_{2/2}-Einheiten, aufweisend (H₂C=CH)(CH₃)₂SiO_{1/2}-Endgruppen,
Copolymere enthaltend (H₂C=CH)(CH₃)SiO_{2/2}- und (CH₃)₂SiO_{2/2}-Einheiten, aufweisend (H₂C=CH)(CH₃)₂SiO_{1/2}-Endgruppen,
Copolymere enthaltend (CH₃)₂SiO_{2/2}-Einheiten, aufweisend (CH₃)₃SiO_{1/2}-Endgruppen.

Die vorstehend genannten Beispiele der organopolysiloxane (A) mit aliphatischen Kohlenstoff-Kohlenstoff-Mehrfachbindungen gelten analog für Organopolysiloxane (A) mit R² als Wasserstoffatom bzw. Hydroxylgruppe. Dabei ist die (H₂C=CH) - Gruppe durch -OH bzw. -H zu ersetzen.

In weiteren Ausführungsformen sind Copolymere möglich die Organopolysiloxane (A) auch aus Kombinationen der vorstehend genannten Beispiele mit R² = (H₂C=CH) - oder -OH oder -H enthalten.

Die verstärkenden Füllstoffe (B) sind bevorzugt vorhydrophobiert. Die vorhydrophobierten verstärkenden Füllstoffe (B) sind vorzugsweise, jeweils oxidisch vorhydrophobierte pulverförmige Füllstoffe, wie pyrogen hergestellte Kieselsäure, gefällte Kieselsäure und Silicium-Aluminium-Mischoxide oder faserförmige Füllstoffe, wie Asbest. Es kann eine Art von Füllstoff, es kann auch ein Gemisch von mindestens zwei Füllstoffen eingesetzt werden. Der durch die Hydrophobierung erhaltene Kohlenstoffgehalt der Füllstoffe (B) beträgt vorzugsweise mindestens 0,5 Gew.-% und vorzugsweise höchstens 6 Gew.-%. Bei der Bestimmung des Kohlenstoffgehalts der Füllstoffe wird durch eine Trocknung von mindestens 2 Stunden bei mindestens 200°C sichergestellt, dass der gemessene Kohlenstoffgehalt sich auf die hydrophobierende Schicht der Füllstoffe (B) bezieht.

Besonders bevorzugt als verstärkende Füllstoffe (B) sind pyrogen hergestellte Kieselsäure und gefällte Kieselsäure. Vorzugsweise betraegt die BET-Oberfläche der Füllstoffe (B) mindestens 50 m²/g, insbesondere mindestens 80 m²/g, speziell mindestens 120 m²/g.

Die Füllstoffe (B) sind durch die Behandlung mit beispielsweise Organosilanen, -silazanen bzw. -siloxanen oder durch Verätherung von Hydroxylgruppen zu Alkoxygruppen hydrophobiert. Ein bevorzugtes Verfahren zur Hydrophobierung ist in US 5,057,151 beschrieben.

Vorzugsweise werden auf 100 Gewichtsteile der Organopolysiloxane (A) mindestens 5, vorzugsweise mindestens 10, insbesondere mindestens 20 Gewichtsteile und höchstens 200, vorzugsweise höchstens 150, insbesondere höchstens 100 Gewichtsteile verstärkende Füllstoffe (B) eingesetzt.

In einer weiteren Ausführungsform kann Wasser in Mengen von 0,01 Gew.% bis 2,0 Gew.%, bevorzugt von 0,03 Gew.% bis 1,5 Gew.%, besonders bevorzugt 0,05 Gew.% bis 1,0% beim ersten Prozessschritt zusetzt werden.

Die nach dem erfindungsgemäßen Verfahren hergestellten Grundmassen können wahlweise als Bestandteil weitere Zusätze (H) zu einem Anteil von vorzugsweise bis zu 70 Gew.-%, bevorzugt 0,0001 bis 40 Gew.-%, enthalten. Dabei können die Zusätze (H) in der ersten Verfahrensstufe, in der zweiten Verfahrensstufe sowie vor oder nach dem erfindungsgemäßen Verfahren zugesetzt werden. Diese Zusätze können beispielsweise Stabilisatoren, Pigmente oder andere Additive sein, welche die Verarbeitung bzw. die Benetzung des eingesetzten Füllstoffs mit dem Organopolysiloxan erleichtern oder der Einstellung bestimmter Endeigenschaften der nach der Vulkanisation erhaltenen Siliconelastomere dienen. Diese Zusätze können beispielsweise auch inaktive Füllstoffe wie Quarz, Talk, harzartige Polyorganosiloxane, Dispergierhilfsmittel, Lösungsmittel, Haftvermittler, Pigmente, Farbstoffe, Weichmacher, organische Polymere, Hitzestabilisatoren usw. sein. Hierzu zählen Zusätze wie Aktivkohle, Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie beispielsweise Glasfasern, Kunststofffasern, Kunststoffpulver, Farbstoffe, Pigmente usw..

Die nach dem erfindungsgemäßen Verfahren hergestellten Grundmassen werden bevorzugt zur Herstellung von RTV-2-Siliconkautschuken verwendet.

Überraschenderweise hat sich gezeigt, dass Siliconzusammensetzungen bzw.Grundmassen aus dem erfindungsgemäßen Verfahren durch den beschriebenen erfindungsgemäßen 2-stufigen Prozess, das in der ersten Verfahrensstufe dem bisher bekannten Verfahren nach EP 0 807 509 A1, und in der zweiten Stufe einer kontinuierlichen Nachbehandlung der aus der ersten Verfahrensstufe erhaltenen Masse über die beschriebene Rührvorrichtung (8) entspricht, hergestellt werden können, die folgende Vorteile aufweisen:
- Verbesserte Stabilität gegenüber Viskositätsanstieg bei Lagerung, insbesondere bei erhöhten Temperaturen,
- verbesserte Stabilität gegenüber Reaktivitätsverlust, also eine geringe Änderung des Vernetzungsverhaltens bei Lagerung,
- verbesserte Stabilität gegenüber unerwünschten Reaktionen mit Additiven, wie beispielsweise Haftvermittlern oder Stabilisatoren.

Zudem weisen die Siliconelastomere, die durch Vernetzung aus Siliconzusammensetzungen hergestellt werden, die erfindungsgemäß hergestellte Grundmassen enthalten, eine leichte Entformbarkeit aus insbesondere metallischen Vulkanisationsformen unmittelbar nach Vulkanisation und ein hohes Niveau der Gebrauchseigenschaften wie Transparenz, und mechanisches Eigenschaftsprofil wie insbesondere Weiterreißwiderstand, Reißfestigkeit und Reißdehung auf.

In einer bevorzugten Ausführungsform ist das Verfahren in der ersten Verfahrensstufe zusätzlich mit wenigstens einer Entgasungsvorrichtung wie beispielsweise einem Entgasungsdom ausgestattet, bei der ein Vakuum angelegt wird. In einer besonders bevorzugten Ausführungsform wird das Vakuum in der steifen Phase angelegt.

In einer bevorzugten Ausführungsform des erfindungsgemäßen Verfahrens ist in der zweiten Verfahrensstufe die mittlere Verweilzeit der Grundmasse länger als in der ersten Verfahrensstufe.

Die Verweilzeit für die in der zweiten Verfahrensstufe hergestellte Grundmasse ist definiert als der Quotient des durch die Grundmasse eingenommenen Anlagevolumens zum austretenden Volumenstrom Y. Die Verweilzeit liegt dabei in einem Bereich zwischen 0,1 bis 15 h, bevorzugt zwischen 0,1 bis 10 h und besonders bevorzugt zwischen 0,1 bis 5 h.

Die zweite Verfahrensstufe betrifft eine kontinuierliche arbeitende Rührvorrichtung (8), die vorzugsweise Mischelemente (10) oder Dispergierelemente (19) oder Abstreifer (20) enthält. In einer besonders bevorzugten Ausführungsform enthält die Rührvorrichtung (8) in der zweiten Verfahrensstufe sowohl Mischelemente (10), Dispergierelemente (19) und Abstreifer (20). Je nach Auslegung der Anlage, d. h. in Abhängigkeit von dem im kontinuierlichen Betrieb eingestellten Volumen, das die Grundmasse in der Rührvorrichtung (8) der zweiten Verfahrensstufe einnimmt, und den Volumenströmen X und Y, können mit der kontinuierlich arbeitenden Rührvorrichtung (8) unterschiedliche Verweilzeiten eingestellt werden.

In einer bevorzugten Ausführungsform wird die Rührvorrichtung (8) der zweiten Verfahrensstufe so betrieben, dass die Grundmasse an einen ausreichend großen Gasraum (13) innerhalb der Rührvorrichtung angrenzt. In einer besonders bevorzugten Ausführungsform wird die Rührvorrichtung (8) der zweiten Verfahrensstufe so betrieben, dass - bezogen auf das Gesamtvolumen der Rührvorrichtung (8) 20 bis 90% Grundmasse enthalten sind, insbesondere 30 bis 80%.

In einer weiteren bevorzugten Ausführungsform des erfindungsgemäßen Verfahrens werden in der zweiten Verfahrensstufe die gemäß erster Verfahrensstufe hergestellten Massen einer Vakuumbehandlung bei erhöhter Temperatur unterworfen. Dabei liegt die Temperatur in einem Bereich zwischen 80 und 250°C, bevorzugt zwischen 100 und 250°C und besonders bevorzugt zwischen 120 und 230°C. Der Druck liegt dabei in einem Bereich zwischen 0,1 und 900 mbar, bevorzugt zwischen 1 und 300 mbar und besonders bevorzugt zwischen 1 und 150 mbar.

In einer weiteren bevorzugten Ausführungsform des erfindungsgemäßen Verfahrens ist in der zweiten Verfahrensstufe das Oberflächen-Volumenverhältnis größer als das der ersten Verfahrensstufe.

Unter dem Oberflächen-Volumenverhältnis wird in der vorliegenden Erfindung das Verhältnis der Oberfläche (14) der Grundmasse, die an ein Vakuum (13) oder einen Gasraum (13) angrenzt, zum Volumen (15), das die Grundmasse in der Rührvorrichtung (8) einnimmt, verstanden. Das Oberflächen-Volumenverhältnis sollte dabei in einem Bereich zwischen 0,1 bis 10, bevorzugt zwischen 0,25 bis 10 und besonders bevorzugt zwischen 0,5 bis 8 liegen.

In einer weiteren bevorzugten Ausführungsform des erfindungsgemäßen Verfahrens werden in der zweiten Verfahrensstufe Mischwerkzeuge (10) eingesetzt, die ausgewählt sind aus der Gruppe, enthaltend: Planeten- oder Doppelplanetenrührwerkzeug, Kreuzbalkenmischwerkzeug, Wendelrührwerkzeug, Propellerrührwerkzeug, Pflugscharwerkzeug jeweils mit oder ohne Abstreifer (20). Dispergierwerkzeuge (19) sind z.B. Dissolverscheiben, Messerkopfwerkzeuge sowie alle Homogenisatoren nach dem Rotor-/Statorprinzip. Dabei können auch Kombinationen aus den beschriebenen Werkzeugen (10), (19) und (20) eingesetzt werden. Besonders bevorzugt werden in der zweiten Verfahrensstufe Misch-(10) und Dispergierwerkzeuge (19) mit Abstreifer (20) eingesetzt, die ausgewählt sind aus der Gruppe, die besteht aus: Planeten- oder Doppelplanetenrührwerltzeug, Kreuzbalkenmischwerkzeug, Pflugscharwerkzeug, Dissolverscheiben, Messerkopfwerkzeuge sowie alle Homogenisatoren nach dem Rotor-/statorprinzip, Abstreifer, oder Kombinationen daraus.

In einer weiteren bevorzugten Ausführungsform des erfindungsgemäßen Verfahrens werden in der zweiten Verfahrensstufe mehrere Misch-(10) und/oder Dispergierwerkzeuge (19) eingesetzt, die über unabhängig voneinander arbeitende Antriebsvorrichtungen (12) angetrieben werden. Dabei können die Misch-(10) und/oder Dispergierwerkzeuge (19) gleich- oder gegensinnig angetrieben werden.

In einer bevorzugten Ausführungsform ist die zweiten Verfahrensstufe mit einer Heiz-/Kühlvorrichtung ausgestattet, mit der die Masse auf eine Temperatur von bis zu 250°C, bevorzugt 200°C, temperiert werden kann. Dies kann beispielsweise über wenigstens einen Hciz-/Kühlmantel realisiert werden, der/die an der Außenwand der Rührvorrichtung montiert ist.

In einer Ausführungsform des erfindungsgemäßen Verfahrens wird in der Rührvorrichtung (8) der zweiten Verfahrensstufe der Volumenstrom X im Verhältnis zum Volumenstrom Y in einen Bereich von 0,5 bis 1,5 eingestellt.

In einer weiteren bevorzugten Ausführungsform der Erfindung erfolgt die Entgasung der Masse in der Rührvorrichtung (8) der zweiten Verfahrensstufe mittels eines kontinuierlichen oder diskontinuierlichen Gasstroms (16) im Vakuum (13), wobei das in die Rührvorrichtung eingeleitete sog. Schleppgas zur besseren Entfernung flüchtiger Bestandteile dient. In einer besonders bevorzugten Ausführungsform werden inerte Gase als Schleppgas eingesetzt, insbesondere Stickstoff.

In einer bevorzugten Ausführungsform ist die erste Verfahrensstufe mit der zweiten Verfahrensstufe direkt verbunden. Dies erfolgt bevorzugt auf eine Weise, dass die in der ersten Verfahrensstufe hergestellte Masse über ein Rohrsystem, gegebenenfalls mit Hilfe einer Fördervorrichtung (17), wie beispielsweise einer Pumpe, mit der zweiten Verfahrensstufe direkt verbunden ist. Dies gewährleistet eine vollkontinuierliche Grundmassenherstellung mit dem erfindungsgemäßen Verfahren.

Die erfindungsgemäß eingesetzte zweite Verfahrensstufe wird im kontinuierlichen Betrieb so gesteuert, dass immer eine ausreichende Menge Masse in der Rührvorrichtung (8) enthalten ist. Dies wird vorwiegend über die Einstellung der Volumenströme X und Y realisiert. Zusätzlich kann über die Steuerung der Drehzahl und der Drehrichtung der Misch-(10) und/oder Dispergierwerkzeuge (19) der Scherkrafteintrag sowie die Mischintensität gezielt eingestellt werden. In einer bevorzugten Ausführungsform liegen die Drehzahlen der Mischwerkzeuge (10) inklusive Abstreifer (20), in einem Bereich von 0,1 bis 200 s⁻¹, besonders bevorzugt in einem Bereich von 1 bis 150 s⁻¹. Dies entspricht einer Umfangsgeschwindigkeit von 0,1-20 m/s, bevorzugt 0,5-10 m/s. In einer weiteren bevorzugten Ausführungsform liegt/liegen die Drehzahl(en) des/der die Dispergierwerkzeugs/Homgenisators (19) in einem Bereich von 50 bis 5000 s⁻¹, besonders bevorzugt in einem Bereich von 200 bis 4000 s⁻¹, entsprechend einer Umfangsgeschwindigkeit von 1-100 m/s, bevorzugt 4-80 m/s.

In einer bevorzugten Ausführungsform der zweiten Verfahrensstufe werden die Misch-(10) und/oder Dispergierwerkzeuge (19) so ausgelegt, dass die Grundmasse zur Austragsöffnung (11) befördert wird. Sie können auch mit Hilfe einer Fördervorrichtung (17), wie beispielsweise einer Pumpehilfe zur Austragsöffnung befördert werden.

Dabei kann diese Fördereinrichtung auch ein Homogenisator mit Förderwirkung sein, der beispielsweise nach dem Rotor-/Statorprinzip arbeitet.

Vorzugsweise sind in der Rührvorrichtung (8) der zweiten Verfahrensstufe neben der Beschickungsöffnung (9) für die Grundmasse aus der ersten Verfahrensstufe weitere Beschickungsöffnungen (18) vorhanden, die eine kontinuierliche Zuführung von beispielsweise Verarbeitungshilfsmitteln, weiteren Organopolysiloxanen oder Additiven erlauben.

Vorzugsweise kann die Rührvorrichtung (8) auch einen Bypasskreislauf enthalten, der es erlaubt, ein beliebiges Verhältnis zwischen 0 und 1 des auszutragenden Volumenstroms Y wieder in die Rührvorrichtung (8) rückzuführen und erneut zu behandeln.

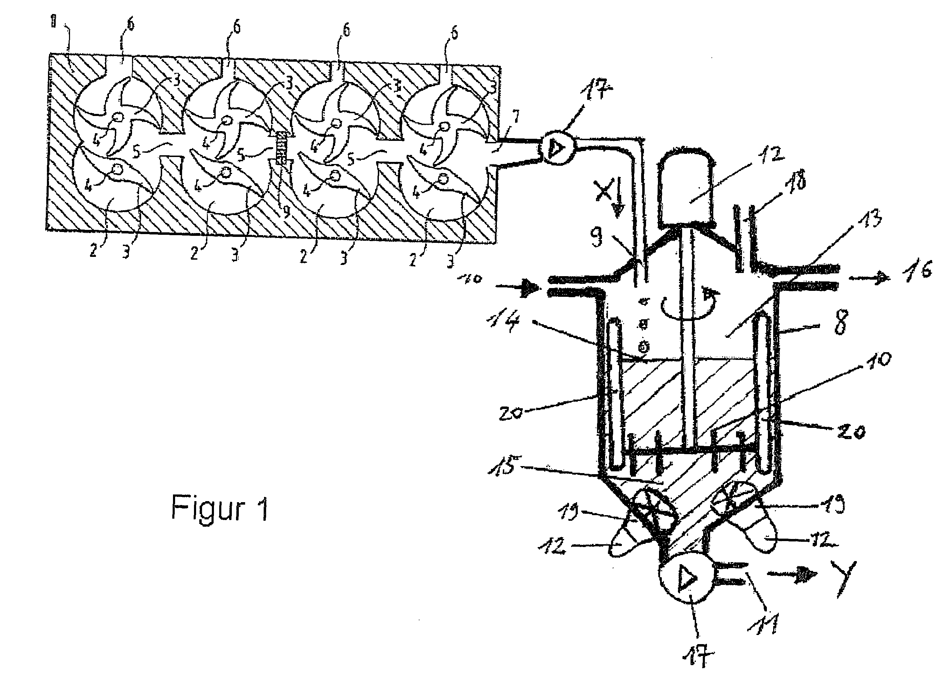

Eine mögliche Ausführungsform unter vielen der ersten und zweiten Verfahrensstufe ist in der Figur 1 als Schnittzeichnung dargestellt. In der Figur 1 sind gleiche Elemente durch die gleichen Zahlen gekennzeichnet. Die Knetkaskade (1) hat in Figur 1 vier in Reihe nebeneinander angeordnete Knetkammern (2). Figur 1 stellt nur eine mögliche Ausführungsform der Apparatur dar, die für das erfindungsgemäße Verfahren verwendet werden kann, ohne das Verfahren jedoch auf diese Apparatur zu beschränken.

Die Beschickungsöffnung (6) können direkt in Knetkammern (2) führen oder zwischen zwei Knetkammern (2) angeordnet sein.

In einer bevorzugten Ausführungsform der Knetkaskade (1) der ersten Verfahrensstufe der Erfindung weist die letzte Knetkammer Pumpflügel für eine Verbesserung des Produktaustrags auf. Die Zudosierung und Einmischung der Einsatzstoffe wie der Organopolysiloxane (A), der Füllstoffe (B), und gegebenenfalls von weiteren Zusätzen in die Grundmasse kann in beliebiger Reihenfolge geschehen; auch kann die Zudosierung z. B. der Füllstoffe (B) in eine oder mehrere Knetkammern(n) (2) der Knetkaskade (1) erfolgen. Die Dosierung der Organopolysiloxane (A) kann sowohl in der ersten Knetkammer (2) als auch - zumindest in Teilen - in einer oder mehreren nachgeschalteten Knetkammern (2) erfolgen, um beispielsweise die Viskosität der Masse zu verringern. In alle Knetkammern (2) können die erforderlichen Füllstoffe (B) dosiert werden, vorzugsweise wird in die letzte Kammer (2) kein Füllstoff (B) dosiert. Dabei ist es möglich die gesamte erforderliche Füllstoffmenge nur in beispielsweise einer/zwei/drei oder vier der ersten Kammern (2) zuzugeben, eine Füllstoffverteilung anteilig über alle ist allerdings ebenfalls möglich.

Die in der Figur 1 als mögliche Ausführungsformen skizzierte Rührvorrichtung (8) der zweiten Verfahrensstufe bestehen aus einem vorzugsweise metallischen Behältnis, das eine Beschickungsöffnung (9) aufweist, über die die Masse aus der ersten Verfahrensstufe mit einem Volumenstrom X zugeführt wird. Die Misch- (10) und/oder Dispergierwerkzeuge (19) können optional auch durch Abstreifer (20) ergänzt werden. Sie werden mit Hilfe von Antriebsvorrichtungen (12), wie beispielsweise eines Elektromotors oder über ein Hydraulikaggregat in Rotation gebracht und können beispielsweise über einen Drehmomentregler unabhängig voneinder gesteuert werden. Die Rührvorrichtung (8) verfügt über einen Gaseinlass und -auslass (16), wobei über den Gaseinlass vorzugsweise ein Schleppgas eingeführt und an dem Gasauslass vorzugsweise ein Vakuum angelegt wird. Über die Austragsöffnung (11) der zweiten Verfahrensstufe erfolgt das Ausschleusen der Grundmasse mit einem Volumenstrom Y.

Die Rührvorrichtung (8) kann als Vertikalmischer oder als Horizontalmischer ausgeführt sein.

### Beispiele

Die nachfolgenden Beispiele erläutern die Erfindung, ohne dabei beschränkend zu wirken.

In den angegebenen Beispielen sind - falls nicht anders angegeben - alle Mengen- und Prozentangaben auf das Gewicht bezogen und alle Drücke 0,10 MPa (abs.).

Im Folgenden werden erfindungsgemäße Beispiele zur kontinuierlichen Herstellung von niedrig viskosen Organopolysiloxan-Grundmassen nach dem erfindungsgemäßen Verfahren in Analogie zur schematischen Figur 1 im Vergleich zum einstufigen Verfahren angeführt.

### Beispiel 1 (nicht erfindungsgemäß)

In einem kontinuierlichen Kneter werden in 30 kg/h α,ω-Divinyl-Organopolysiloxan mit einer Viskosität von ca. 1.000 mPas 25 kg/h behandelte Kieselsäure der Type HDK^{®} SKS 130 der Fa. Wacker Chemie AG eingearbeitet, wobei die Temperatur auf 180°C steigt. Am Ende des Kneters wird mit 20 kg/h α,ω-Divinyl-Organopolysiloxan mit einer Viskosität von ca. 1.000 mPas zur gewünschten Endviskosität verdünnt. Nach Abkühlen der so erhaltenen Organopolysiloxan-Grundmasse wird mit Hilfe eines Brookfield-Viskonteters bei 23°C die Viskosität bestimmt.

Die Viskosität ist nicht messbar, die Masse ist standfest und nicht fließfähig. Eine Weiterverarbeitung zu einer fließfähigen Fertigmasse ist nicht möglich.

### Beispiel 2 (erfindungsgemäß)

In einem kontinuierlichen Kneter werden in 30 kg/h α,ω-Divinyl-Organopolysiloxan mit einer Viskosität von ca. 1.000 mPas 25 kg/h behandelte Kieselsäure der Type HDK^{®} SKS 130 der Fa. Wacker Chemie AG eingearbeitet, wobei die Temperatur auf 180°C steigt. Am Ende des Kneters wird mit 20 kg/h α,ω-Divinyl-organopolysiloxan mit einer Viskosität von ca. 1.000 mPas zur gewünschten Endviskosität verdünnt. Der Materialstrom wird weitergeleitet zu einem kontinuierlichen Mischer und dort bei 180°C und einem Vakuum von 100 mbar abs. gemischt und mit 2 Dissolverscheiben bei 1.300 U/min geschert. Dabei wird kontinuierlich Material entnommen, so dass sich aus dem Durchsatz aus Stufe 1 und dem Volumen eine durchschnittliche Verweilzeit von 2 h ergibt.

Nach Abkühlen der so erhaltenen Organopolysiloxan-Grundmasse wird mit Hilfe eines Brookfield-Viskometers bei 23°C die Viskosität bestimmt.

Die Viskosität liegt bei 80.000 mPas messbar, die Masse ist sehr gut fließfähig. Eine Weiterverarbeitung zu einer fließfähigen Fertigmasse ist problemlos möglich.

Nachstehende Tabelle 1 zeigt das Viskositätsverhalten der Masse aus Beispiel 2 im Vergleich zu einer Referenz ohne zweite Prozessstufe (Beispiel 1) nach Herstellung t = 0 d(=Tage) und nach einer Lagerzeit von t = 28 d.

**Tabelle 1**

| | Viskosität [mPa*s] t=0 d | Viskosität [mPa*s] t=28 d | Differenz [mPa*s] |
|---|---|---|---|
| Referenz (Beispiel 1) | standfest, nicht messbar | standfest, nicht messbar | -- |
| Beispiel 2 | 80.000, fließfähig | 95.000, fließfähig | 15.000 |

### Beispiel 3 (nicht erfindungsgemäß)

In einem kontinuierlichen Kneter werden in 25 kg/h α,ω-Divinyl-organopolysiloxan mit einer Viskosität von ca. 1.000 mPas 25 kg/h behandelte Kieselsäure der Type HDK^{®} SKS 130 der Fa. Wacker Chemie AG eingearbeitet, wobei die Temperatur auf 180°C steigt. Am Ende des Kneters wird mit 25 kg/h α,ω-Dihydrogen-Organopolysiloxan mit einer Viskosität von ca. 1.000 mPas zur gewünschten Endviskosität verdünnt. Nach Abkühlen der so erhaltenen Organopolysiloxan-Grundmasse wird mit Hilfe eines Brookfield-Viskometers bei 23°C die Viskosität bestimmt.

Die Viskosität ist nicht messbar, die Masse ist standfest und nicht fließfähig. Eine Weiterverarbeitung zu einer fließfähigen Fertigmasse ist nicht möglich.

### Beispiel 4 (erfindungsgemäß)

In einem kontinuierlichen Kneter werden in 25 kg/h α,ω-Divinyl-Organopolysiloxan mit einer Viskosität von ca. 1.000 mPas 25 kg/h behandelte Kieselsäure der Type HDK^{®} SKS 130 der Fa.

Wacker Chemie AG eingearbeitet, wobei die Temperatur auf 180°C steigt. Am Ende des Kneters wird mit 25 kg/h α,ω-Dihydrogen-Organopolysiloxan mit einer Viskosität von ca. 1.000 mPas zur gewünschten Endviskosität verdünnt. Der Materialstrom wird weitergeleitet zu einem kontinuierlichen Mischer und dort bei 180°C und einem Vakuum von 100 mbar abs. gemischt und mit 2 Dissolverscheiben bei 1.300 U/min geschert. Dabei wird kontinuierlich Material entnommen, so dass sich aus dem Durchsatz aus Stufe 1 und dem Volumen eine durchschnittliche Verweilzeit von 2 h ergibt.

Nach Abkühlen der so erhaltenen Organopolysiloxan-Grundmasse wird mit Hilfe eines Brookfield-Viskometers bei 23°C die Viskosität bestimmt.

Die Viskosität liegt bei 50.000 mPas messbar, die Masse ist sehr gut fließfähig. Eine Weiterverarbeitung zu einer fließfähigen Fertigmasse ist problemlos möglich.

Nachstehende Tabelle 2 zeigt das Viskositätsverhalten der Masse aus Beispiel 4 im Vergleich zu einer Referenz ohne zweite Prozessstufe (Beispiel 3) nach Herstellung t = 0 d und nach einer Lagerzeit von t = 28 d

**Tabelle 2**

| | Viskosität [mPa*s] t=0 d | Viskosität [mPa*s] t=28 d | Differenz [mPa*s] |
|---|---|---|---|
| Referenz (Beispiel 3) | standfest, nicht messbar | standfest, nicht messbar | -- |
| Beispiel 4 | 50.000, fließfähig | 80.000, fließfähig | 30.000 |

### Beispiel 5 (nicht erfindungsgemäß)

In einem kontinuierlichen Kneter werden in 25 kg/h α,ω-Divinyl-Organopolysiloxan mit einer Viskosität von ca. 1000 mPas 0,1 kg/h entionisiertes Wasser 25 kg/h behandelte Kieselsäure der Type HDK^{®} SKS 130 der Fa. Wacker Chemie AG eingearbeitet, wobei die Temperatur auf 180°C steigt. Am Ende des Kneters wird mit 25 kg/h α,ω-Dihydrogen-Organopolysiloxan mit einer Viskosität von ca. 1000 mPas zur gewünschten Endviskosität verdünnt. Nach Abkühlen der so erhaltenen Organopolysiloxan-Grundmasse wird mit Hilfe eines Brookfield-Viskometers bei 23°C die Viskosität bestimmt.

Die Viskosität ist nicht messbar, die Masse ist standfest und nicht fließfähig. Eine Weiterverarbeitung zu einer fließfähigen Fertigmasse ist nicht möglich.

### Beispiel 6 (erfindungsgemäß)

In einem kontinuierlichen Kneter werden in 25 kg/h α,ω-Divinyl-Organopolysiloxan mit einer Viskosität von ca. 1.000 mPas 0,1 kg/h entionisiertes Wasser 25 kg/h behandelte Kieselsäure der Type HDK^{®} SKS 130 der Fa. Wacker Chemie AG eingearbeitet, wobei die Temperatur auf 180°C steigt. Am Ende des Kneters wird mit 25 kg/h α,ω-Dihydrogen-Organopolysiloxan mit einer Viskosität von ca. 1000 mPas zur gewünschten Endviskosität verdünnt. Der Materialstrom wird weitergeleitet zu einem kontinuierlichen Mischer und dort bei 180°C und einem Vakuum von 100 mbar abs. gemischt und mit 2 Dissolverscheiben bei 1.300 U/min geschert. Dabei wird kontinuierlich Material entnommen, so dass sich aus dem Durchsatz aus Stufe 1 und dem Volumen eine durchschnittliche Verweilzeit von 2 h ergibt.

Nach Abkühlen der so erhaltenen Organopolysiloxan-Grundmasse wird mit Hilfe eines Brookfield-Viskometers bei 23°C die Viskosität bestimmt.

Die Viskosität liegt bei 40.000 mPas messbar, die Masse ist sehr gut fließfähig. Eine Weiterverarbeitung zu einer fließfähigen Fertigmasse ist problemlos möglich.

Nachstehende Tabelle 3 zeigt das Viskositätsverhalten der Masse aus Beispiel 6 im Vergleich zu einer Referenz ohne zweite Prozessstufe (Beispiel 5) nach Herstellung t = 0 d und nach einer Lagerzeit von t = 28 d

**Tabelle 3:**

| | Viskosität [mPa*s] t=0 d | Viskosität [mPa*s] t=28 d | Differenz [mPa*s] |
|---|---|---|---|
| Referenz (Beispiel 5) | standfest, nicht messbar | standfest, nicht messbar | -- |
| Beispiel 6 | 40.000, fließfähig | 45.000, fließfähig | 5.000 |

### Beispiel 7 (nicht erfindungsgemäß)

In einem kontinuierlichen Kneter werden in 35 kg/h α,ω-Dihydroxy-Organopolysiloxan mit einer Viskosität von ca. 20.000 mPas 21 kg/h behandelte Kieselsäure der Type HDK^{®} SKS 130 der Fa. Wacker Chemie AG eingearbeitet, wobei die Temperatur auf 160°C steigt. Am Ende des Kneters wird mit 31 kg/h α,ω-Dihydroxy-Organopolysiloxan mit einer Viskosität von ca. 75.000 mPas und mit 7 kg/h α,ω-Dihydroxy-Organopolysiloxan mit einer Viskosität von ca. 20.000 mPas zur gewünschten Endviskosität verdünnt. Nach Abkühlen der so erhaltenen Organopolysiloxan-Grundmasse wird mit Hilfe eines Brookfield-Viskometers bei 23°C die Viskosität bestimmt.

Die Viskosität ist nicht messbar, die Masse ist standfest und nicht fließfähig. Eine Weiterverarbeitung zu einer fließfähigen Fertigmasse ist nicht möglich.

### Beispiel 8 (erfindungsgemäß)

In einem kontinuierlichen Kneter werden in 35 kg/h α,ω-Dihydroxy-Organopolysiloxan mit einer Viskosität von ca. 20.000 mPas 21 kg/h behandelte Kieselsäure der Type HDK^{®} SKS 130 der Fa. Wacker Chemie AG eingearbeitet, wobei die Temperatur auf 160°C steigt. Am Ende des Kneters wird mit 31 kg/h α,ω-Dihydroxy-organopoiysiloxan mit einer viskosität von ca. 75000 mPas und mit 7 kg/h α,ω-Dihydroxy-organopolysiloxan mit einer Viskosität von ca. 20.000 mPas zur gewünschten Endviskosität verdünnt. Der Materialstrom wird weitergeleitet zu einem kontinuierlichen Mischer und dort bei 180°C und einem Vakuum von 100 mbar abs. gemischt und mit 2 Dissolverscheiben bei 1.300 U/min geschert. Dabei wird kontinuierlich Material entnommen, so dass sich aus dem Durchsatz aus Stufe 1 und dem Volumen eine durchschnittliche Verweilzeit von 2 h ergibt.

Nach Abkühlen der so erhaltenen Organopolysiloxan-Grundmasse wird mit Hilfe eines Brookfield-Viskometers bei 23°C die Viskosität bestimmt.

Die Viskosität liegt bei 250.000 mPas messbar, die Masse ist sehr gut fließfähig. Eine Weiterverarbeitung zu einer fließfähigen Fertigmasse ist problemlos möglich.

Nachstehende Tabelle 4 zeigt das Viskositätsverhalten der Masse aus Beispiel 8 im Vergleich zu einer Referenz ohne zweite Prozessstufe (Beispiel. 7) nach Herstellung t = 0 d und nach einer Lagerzeit von t = 28 d

**Tabelle 4**

| | Viskosität [mPa*s] t=0 d | Viskosität [mPa*s] t=28 d | Differenz (mPa*s] |
|---|---|---|---|
| Referenz (Beispiel 7) | standfest, nicht messbar | standfest, nicht messbar | -- |
| Beispiel 8 | 250.000, fließfähig | 277.000, fließfähig | 27.000 |

Man erkennt aus allen angeführten Beispielen, dass es mit dem erfindungsgemäß beschriebenen zweistufigen Verfahren erstmals möglich ist, niedrig viskose, lagerstabile Organopolysiloxanmassen für die Verwendung in RTV-2 Fertigprodukten kontinuierlich herzustellen.

## Patentansprüche

1. Verfahren zur Herstellung von Grundmassen mit einer Viskosität von < 500.000 mPas, gemessen bei 25°C und einer Scherrate von 1 s⁻¹, bei dem
mindestens ein Organopolysiloxan (A) ausgewählt aus der Gruppe enthaltend pro Molekül im Durchschnitt mindestens 1,5 Reste mit aliphatisch ungesättigten Kohlenstoff-Kohlenstoff-Mehrfachbindungen oder Hydroxylgruppen oder Wasserstoffatome oder Kombinationen daraus
mit
mindestens einem vorhydrophobierten, oxidischen, verstärkenden Füllstoff (B) mit einem durch die Hydrophobierung erhaltenen Kohlenstoffgehalt von mindestens 0,5 Gew. -%,
in einer ersten Verfahrensstufe in einer Knetkaskade (1) mit wenigstens zwei in Reihe nebeneinander angeordneten Knetkammern (2), die jeweils zwei achsparallele, gleich- oder gegensinnig angetriebene Knetwerkzeuge (3) enthalten und die durch quer zu den Achsen (4) der Knetwerkzeuge (3) passierbare Öffnungen (5) miteinander verbunden sind, wobei mindestens die erste Knetkammer eine Beschickungsöffnung (6) und die letzte Knetkammer eine Austragsöffnung (7) aufweisen, homogen miteinander vermischt und geknetet werden,
und die so erhaltene Masse,
in einer zweiten nachgeschalteten Verfahrensstufe einer Nachbehandlung in einer Rührvorrichtung (8) unterworfen wird, die über eine Beschickungsöffnung (9) verfügt, über welche die über die erste Verfahrensstufe hergestellte Masse mit einem definierten Volumenstrom X der Rührvorrichtung (8) zugeführt, unter fortwährender Erneuerung der Oberfläche (14) unter Einsatz von rotierenden Misch- (10) oder Dispergierwerkzeugen (19) oder Abstreifern (20) oder deren Kombination, mit Scherkraft beaufschlagt und entgast, und über eine Austragsöffnung (11) mit dem Volumenstrom Y aus der zweiten Verfahrensstufe ausgeschleust wird.

2. verfahren gesäß Anspruch 1, **dadurch gekennzeichnet, dass** zusätzlich Wasser in Mengen von 0,01 Gew.% bis 2,0 Gew.%, beim ersten Prozessschritt zugesetzt wird.

3. Verfahren gemäß Anspruch 1 oder 2, **dadurch gekenntzeichnet, dass** das Organopolysiloxan (A) aus Einheiten der allgemeinen Formel (I) besteht
R¹ₐR²_{b}SiO_{(4-a-b)/2} (I)
wobei
R¹ einwertige, gegebenenfalls mit Halogenatomen substituierte C₁- bis C₁₀-Kohlenwasserstoffreste, die frei sind von aliphatischen Kohlenstoff-Kohlenstoff-Mehrfachbindungen,
R² Wasserstoffatome, Hydroxylgruppen oder einwertige Kohlenwasserstoffreste mit aliphatischer Kohlenstoff-Kohlenstoff-Mehrfachbindung mit 2 bis 8 Kohlenstoffatomen je Rest,
a die Werte 0, 1, 2 oder 3 und
b die Werte 0, 1 oder 2
bedeuten.

4. Verfahren gemäß Anspruch 1 bis 3, **dadurch gekennzeichnet, dass** in der zweiten Verfahrensstufe die mittlere Verweilzeit der Grundmasse länger als in der ersten Verfahrensstufe ist.

5. Verfahren gemäß einem der Ansprüche 1 bis 4, **dadurch gekennzeichnet, dass** in der zweiten Verfahrensstufe das Oberflächen-Volumenverhältnis größer als das der ersten Verfahrensstufe ist.

6. Verfahren gemäß einem der Ansprüche 1 bis 5, **dadurch gekennzeichnet, dass** in der zweiten Verfahrensstufe die gemäß erster Verfahrensstufe hergestellten Massen einer Vakuumbehandlung bei einer Temperatur von 80 bis 250°C unterworfen sind.

7. Verfahren gemäß einem der Ansprüche 1 bis 6, **dadurch gekennzeichnet, dass** die Verweilzeit der 2. Verfahrensstufe in einem Bereich zwischen 0,1 bis 15 h liegt.

8. Verfahren gemäß einem der Ansprüche 1 bis 7, **dadurch gekennzeichnet, dass** in der zweiten Verfahrensstufe eine Kombination aus Misch- (10), Dispergierwerkzeug (19) und Abstreifer (20) verwendet wird.

## Claims

1. Process for the production of parent compositions with viscosity < 500 000 mPas, measured at 25°C using a shear rate of 1 s⁻¹, by homogeneously mixing and kneading the following with one another:
at least one organopolysiloxane (A) selected from the group containing, per molecule, on average, at least 1.5 moieties having aliphatically unsaturated carbon-carbon multiple bonds, or hydroxy groups or hydrogen atoms, or a combination thereof
and
at least one prehydrophobized oxidic reinforcing filler (B) having at least 0.5% by weight carbon content gained via the hydrophobizing process,
in a first stage of the process, in a kneading cascade (1) with at least two kneading chambers (2) arranged alongside one another in series, and each of these comprises, parallel to the axis, two kneading units (3) driven so as to co- or counterrotate, and has connection to the other kneading chamber(s) via passage apertures (5) running perpendicularly with respect to the axes (4) of the kneading units (3), where at least the first kneading chamber has a supply aperture (6) and the last kneading chamber has a discharge aperture (7),
and subjecting the resultant composition,
in a second downstream stage of the process, to aftertreatment in a mixing apparatus (8), which has a supply aperture (9), by way of which the composition produced by way of the first stage of the process is introduced at a defined volume flow rate X to the mixing apparatus (8), subjected to shear force and devolatilized, with constant renewal of the surface (14), with use of rotating mixing units (10), or dispersing units (19), or scrapers (20), or a combination of these, and is discharged from the second stage of the process by way of a discharge aperture (11) at the volume flow rate Y.

2. Process according to Claim 1, **characterized in that** amounts of from 0.01 % by weight to 2.0% by weight of water are also added during the first step of the process.

3. Process according to Claim 1 or 2, **characterized in that** the organopolysiloxane (A) is composed of units of the general formula (I)
R¹ₐR²_{b}SiO_{(4-a-b)/2} (I)
where
R¹ are monovalent C₁-C₁₀-hydrocarbon moieties free from aliphatic carbon-carbon multiple bonds and optionally substituted with halogen atoms,
R² are hydrogen atoms, hydroxy groups, or monovalent hydrocarbon moieties having an aliphatic carbon-carbon multiple bond, having from 2 to 8 carbon atoms per moiety,
a is the value 0, 1, 2, or 3, and
b is the value 0, 1, or 2.

4. Process according to any of Claims 1 to 3, **characterized in that** the average residence time of the parent composition is longer in the second stage of the process than in the first stage of the process.

5. Process according to any of Claims 1 to 4, **characterized in that** the surface-area-to-volume ratio is greater in the second stage of the process than in the first stage of the process.

6. Process according to any of Claims 1 to 5, **characterized in that**, in the second stage of the process, the compositions produced in the first stage of the process have been subjected to vacuum treatment at a temperature of from 80 to 250°C.

7. Process according to any of Claims 1 to 6, **characterized in that** the residence time of the 2nd stage of the process is in the range from 0.1 to 15 h.

8. Process according to any of Claims 1 to 7, **characterized in that** the second stage of the process uses a combination of mixing unit (10), dispersing unit (19), and scraper (20).

## Revendications

1. Procédé pour la production de masses de base ayant une viscosité de < 500 000 mPa.s, mesurée à 25 °C et à une vitesse de cisaillement de 1 s⁻¹, dans lequel on mélange entre eux et malaxe de façon homogène
au moins un organopolysiloxane (A) choisi dans le groupe contenant par molécule en moyenne au moins 1,5 radicaux à liaisons multiples carbone-carbone à insaturation aliphatique ou groupes hydroxy ou atomes d'hydrogène ou associations de ceux-ci
avec
au moins une charge de renfort (B) de type oxyde préalablement rendue hydrophobe, ayant une teneur en carbone, obtenue par l'hydrophobisation, d'au moins 0,5 % en poids,
dans un premier stade du procédé dans une cascade de malaxage (1) comportant au moins deux chambres de malaxage (2) disposées en série l'une/les unes à côté de l'autre/des autres, qui contiennent chacune deux outils de malaxage (3) à axes parallèles, actionnés dans le même sens ou en sens contraire, et qui sont reliées entre elles par des ouvertures (5) permettant le passage transversalement par rapport aux axes (4) des outils de malaxage (3), au moins la première chambre de malaxage comportant un orifice d'alimentation (6) et la dernière chambre de malaxage comportant un orifice de décharge (7),
et la masse ainsi obtenue,
est soumise, dans un deuxième stade du procédé raccordé en aval, à un post-traitement dans un dispositif d'agitation (8) qui est doté d'un orifice d'alimentation (9), par lequel la masse produite dans le premier stade du procédé est envoyée avec un débit volumique X défini au dispositif d'agitation (8), exposée à une force de cisaillement et dégazée avec renouvellement constant de la surface (14), à l'aide d'outils rotatifs de mélange (10) ou de dispersion (19) ou de racles (20) ou d'une combinaison de ceux-ci, et est déchargée du deuxième stade du procédé par un orifice de décharge (11) avec le débit volumique Y.

2. Procédé selon la revendication 1, **caractérisé en ce que** dans la première étape du processus on ajoute en outre de l'eau en quantités de 0,01 % en poids à 2,0 % en poids.

3. Procédé selon la revendication 1 ou 2, **caractérisé en ce que** l'organopolysiloxane (A) est constitué de motifs de formule générale (I)
R¹ₐR²_{b}SiO_{(4-a-b)/2} (I)
dans laquelle,
R¹ représente des radicaux hydrocarbonés en C₁-C₁₀ monovalents éventuellement substitués par des atomes d'halogène, qui sont exempts de liaisons multiples carbone-carbone aliphatiques,
R² représente des atomes d'hydrogène, des groupes hydroxy ou des radicaux hydrocarbonés monovalents à liaison multiple carbone-carbone aliphatique, ayant de 2 à 8 atomes de carbone par radical,
a représente les valeurs 0, 1, 2 ou 3 et
b représente les valeurs 0, 1 ou 2.

4. Procédé selon les revendications 1 à 3, **caractérisé en ce que** le temps de séjour moyen de la masse de base dans le deuxième stade du procédé est plus long que dans le premier stade du procédé.

5. Procédé selon l'une quelconque des revendications 1 à 4, **caractérisé en ce que** dans le deuxième stade du procédé le rapport surface-volume est supérieur à celui du premier stade du procédé.

6. Procédé selon l'une quelconque des revendications 1 à 5, **caractérisé en ce que** dans le deuxième stade du procédé les masses produites selon le premier stade du procédé sont soumises à un traitement sous vide à une température de 80 à 250 °C.

7. Procédé selon l'une quelconque des revendications 1 à 6, **caractérisé en ce que** le temps de séjour du 2^{e} stade du procédé se situe dans une plage comprise entre 0,1 et 15 h.

8. Procédé selon l'une quelconque des revendications 1 à 7, **caractérisé en ce que** dans le deuxième stade du procédé on utilise une combinaison d'outil de mélange (10), d'outil de dispersion (19) et de racle (20).
